# FASCICULE DE BREVET EUROPEEN

(11) **EP 4 626 007 B1**
(45) Date de publication et mention de la délivrance du brevet: **07.10.2026**
(21) Numéro de dépôt: 25164486.0
(22) Date de dépôt: 18.03.2025
(51) Int. Cl.: H04N 23/12, H04N 23/80, H04N 23/667, H04N 25/131

(54) **CAMERA A DEUX IMAGES NATIVES DE SORTIE**
KAMERA MIT ZWEI NATIVEN AUSGABEBILDERN
CAMERA HAVING TWO NATIVE OUTPUT IMAGES

(30) Priorité: 29.03.2024 FR 2403258
(43) Date de publication de la demande: 01.10.2025
(73) Titulaire: STMicroelectronics International N.V., 1228 Plan-les-Ouates, Geneva (CH)
(72) Inventeur: MARTIN, Adrien, 38100 Grenoble (FR)
(74) Mandataire: Casalonga

(56) Documents cités:
- US-A1- 2016 048 731
- US-B2- 7 839 437
- US-B2- 8 610 808

## Description

### DOMAINE TECHNIQUE

Des modes de réalisation et de mise en œuvre concernent le domaine du traitement du signal et plus particulièrement celui des capteurs d'images ou « caméras ».

### CONTEXTE TECHNIQUE

Les équipements électroniques portables classiques sont généralement dotés d'une caméra numérique native, dite webcam, et d'une caméra à infrarouge (IR). On entend par « équipement électronique portable » tout aussi bien un ordinateur (PC pour « personnal computer ») portable, qu'une tablette ou un téléphone intelligence (ou « smartphone »).

La webcam est typiquement utilisée pour l'acquisition d'images dans le spectre visible pour des applications numériques (e.g. des communications sur Internet). On entend par « images » tout autant des images fixes que des images d'une séquence vidéo. De nombreux modèles différents de webcam existent sur le marché, qui évoluent rapidement dans le temps d'une version d'équipement électronique portable à l'autre.

La caméra à infrarouge est traditionnellement combinée à un dispositif d'éclairage infrarouge (généralement proche infrarouge ou NIR pour « near infrared ») pour capter des images dans le spectre non-visible. La caméra IR est généralement utilisée dans le cadre d'applications d'identification, type reconnaissance faciale, où l'utilisation de l'infrarouge permet de faire la différence entre une photographie ou scan et une personne vivante.

De nouvelles applications reposant sur le traitement, par des moteurs d'intelligence artificielle (IA), d'images du spectre visible ont vu le jour, telles que la vision par ordinateur (ou « computer vision » en langue anglosaxonne).

Les webcams apparaissent peu adaptées à ces nouvelles applications en raison de leur cycle d'évolution continu. En particulier, il peut s'avérer nécessaire de faire réapprendre le moteur d'IA à chaque nouvelle génération de webcam, ce qui induit nécessairement des coûts additionnels (temps et consommation électrique) en plus des contraintes techniques de déploiement des moteurs d'IA appris dans les bons équipements.

Par ailleurs, la présence classique du volet d'obturation de la webcam peut nuire à l'efficacité de ces applications, car des images « trompeuses » - car dénuées de scène - sont acquises et traitées.

L'ajout d'une nouvelle (troisième) caméra pour ces applications basées sur l'IA devrait être évité tant pour des raisons de coût que pour des raisons d'intégration matérielle et/ou esthétique.

Aussi, il existe un besoin d'améliorer les caméras existantes.

US7839437B2 divulgue un dispositif d'image avec une matrice de filtres de pixels comprenant des filtres (RGB) et (W).

US8610808B2 divulgue un dispositif d'image avec une matrice de filtres de pixels comprenant des filtres (RGB) et(APD, avalanche photodiode).

US2016/048731A1 divulgue un dispositif d'image avec une matrice de filtres de pixels comprenant des filtres (lumière visible sans IR) et (IR).

### RESUME

Reprenant le scénario ci-dessus, il est envisagé de faire évoluer la caméra infrarouge vers une caméra à deux images natives de sortie, capable de générer nativement à la fois une image dans le domaine spectral du visible et une image dans le domaine IR. Cette caméra IR améliorée présente en effet l'avantage de peu évoluer d'une génération d'équipement électronique portable à l'autre (au contraire de la webcam), tout en n'étant pas équipée de volet d'obturation.

Plus généralement, une caméra à deux images natives de sortie telle qu'exposée ci-après peut concerner d'autres domaines que l'infrarouge.

Selon un aspect, il est donc proposé un dispositif d'image tel que défini par la revendication 1.

Selon un deuxième aspect, il est proposé un procédé d'acquisition tel que défini par la revendication 11.

Le sous-échantillonnage des pixels dits P2 (correspondant optiquement à un filtre P2) permet d'obtenir une première image mono-composant, de résolution 1/Q (ratio de filtres P2 dans le motif répété), sans outil supplémentaire qu'un mécanisme classique de sous-échantillonnage déjà existant.

De même, l'application du mécanisme de correction de défaut de pixel (ou « defect correction » en langue anglo-saxonne) permet, de façon originale, de transformer les pixels P2 de l'image acquise en pixels de type P1 car extrapolés en fonction des pixels P1 voisins. Et ce, sans outil supplémentaire que le mécanisme classique de correction de défaut déjà existant. Une deuxième image mono-composant est ainsi également obtenue, de résolution maximale (celle de la matrice de pixels du capteur).

Deux images mono-composant de qualité sont donc générées lors d'une même acquisition, sans outil additionnel aux mécanismes déjà existants dans les capteurs ou systèmes d'acquisition d'images.

Une telle caméra à deux sorties natives peut avantageusement être utilisée comme caméra IR (en combinaison avec un dispositif d'illumination NIR) pour des opérations d'identification par reconnaissance faciale et comme caméra dans le spectre visible pour des applications IA, type vision par ordinateur.

Aussi, il est également proposé un système d'imagerie comprenant une unité de traitement et un dispositif d'image, tel que défini ci-dessus, fournissant l'une des première et deuxième images à l'unité de traitement lorsque celle-ci opère dans un mode d'identification par reconnaissance faciale et fournit l'autre image à l'unité de traitement lorsque celle-ci opère dans un mode de vision par ordinateur.

Le procédé présente les mêmes avantages que ceux du dispositif précité.

Des caractéristiques facultatives de modes de réalisation sont définies dans les revendications annexées. Certaines de ces caractéristiques sont expliquées ci-dessous en référence à un dispositif, tandis qu'elles peuvent être transposées en caractéristiques de procédé.

Dans un mode de réalisation, le motif de filtres est un filtre matriciel n*m comprenant n*m-1 filtres P1 et un filtre P2 (n et m sont des entiers positifs). Le motif est donc constitué que de filtres P1 et P2. n=m pour un motif carré ; sinon le motif est rectangulaire. Cette configuration permet une mise en œuvre simple et offre une efficacité de la correction de défaut de pixel en raison d'un grand nombre de pixels P1 voisins de chaque pixel P2 isolé à « corriger ». La qualité résultante de la deuxième image est d'autant meilleure que n et m sont grands.

Dans un mode de réalisation, le motif de filtres est l'un parmi :
(a) P1 P1
   P1 P2
(b) P1 P1 P1
   P1 P1 P1
   P1 P1 P2
(c) P1 P1 P1
   P1 P1 P2
(d) P1 P1
   P1 P1
   P1 P2.

Dans un mode de réalisation, tout filtre P2 non-périphérique dans la matrice de filtres (i.e., pas sur les bords de la matrice) est entouré par plus de filtres P1 que de filtres P2. En d'autres termes, plus de la moitié des filtres voisins d'un filtre P2 sont des filtres P1. Les filtres en bordure de la matrice sont des exceptions en ce qu'ils manquent de filtres voisins devant résulter de la répétition du motif.

La disposition ci-dessus garantit l'isolement des pixels P2 dans l'image acquise, pour une meilleure détection des pixels P2 comme étant ceux à « corriger », et donc une meilleure efficacité de la correction de défaut de pixel en vue de générer la deuxième image.

Dans un mode de réalisation, tout filtre P1 non-périphérique dans la matrice de filtres est entouré par autant ou plus de filtres P1 que de filtres P2. En d'autres termes, au moins la moitié des filtres voisins d'un filtre P1 sont des filtres P1. Cela garantit que les pixels P1 ne seront pas détectés différents des pixels voisins et donc pas détectés comme étant des pixels à « corriger ». Cela contribue à l'obtention d'une deuxième image de qualité.

Les filtres P1 sont des filtres clairs (c'est-à-dire soit sans filtre optique, soit avec filtre optique sans couleur) et les filtres P2 sont des filtres infrarouge (laissant passer tout ou partie du spectre infrarouge).

En variante, les filtres P1 sont des filtres infrarouge et les filtres P2 sont des filtres clairs.

Ces configurations s'appliquent particulièrement bien au scenario évoqué plus haut. En particulier, l'image fournie à l'unité de traitement dans un mode d'identification par reconnaissance faciale est une image infrarouge, alors que l'image fournie à l'unité de traitement dans un mode de vision par ordinateur est une image dans le spectre visible.

Le dispositif peut efficacement remplacer la caméra IR des équipements électroniques portables existants, aux fins d'offrir une image IR pour une application d'identification par reconnaissance faciale et une image du spectre visible pour une application IA, type vision par ordinateur.

Dans un mode de réalisation, le mécanisme de correction de défaut est configuré pour appliquer un filtre médian bi-dimensionnel (typiquement 3*3) à tout pixel déterminé comme défectueux dans l'image acquise.

En particulier, un pixel est déterminé comme défectueux dans l'image acquise lorsque sa valeur est en dehors d'une plage de valeurs fonction des valeurs prises par des pixels voisins. Typiquement, les bornes de la plage de valeurs sont déterminées par les valeurs minimale et maximale prises par les pixels voisins, éventuellement modifiées d'un intervalle de garde.

On entend par "voisin" les pixels immédiatement adjacents au pixel considéré (pixels de premier rang), ou en variante, également les pixels de deuxième rang (c'est-à-dire voisins de voisins).

S'il est bien entendu possible de prendre en compte l'ensemble des voisins, certains modes de réalisation privilégient le cas où les pixels voisins sont des pixels voisins correspondant à des filtres P1. Cette disposition permet une meilleure identification, par le mécanisme de correction de défaut, des seuls pixels P2.

Typiquement, le mécanisme de correction de défaut réalise de façon automatique l'identification des pixels défectueux et leur remplacement par le filtre médian. Bien entendu, d'autres filtres correctifs que le filtre médian peuvent être utilisés, par exemple un filtre convolutif de type moyenneur. De façon générale, le filtre correctif utilisé est basé sur les pixels voisins du pixel défectueux.

### BREVE DESCRIPTION DES FIGURES

D'autres avantages et caractéristiques de l'invention apparaîtront à l'examen de la description détaillée de mode de réalisation et de mise en œuvre, nullement limitatifs, et des dessins annexés sur lesquels :
[Fig. 1] ;
[Fig. 2] ;
[Fig. 2A] ;
[Fig. 3] ;
[Fig. 4] ;
[Fig. 5] ; et
[Fig. 6] illustrent schématiquement des modes de mise en œuvre et de réalisation de l'invention.

Par souci de clarté, de mêmes éléments sont désignés par de mêmes références dans les différentes figures.

### DESCRIPTION DETAILLEE

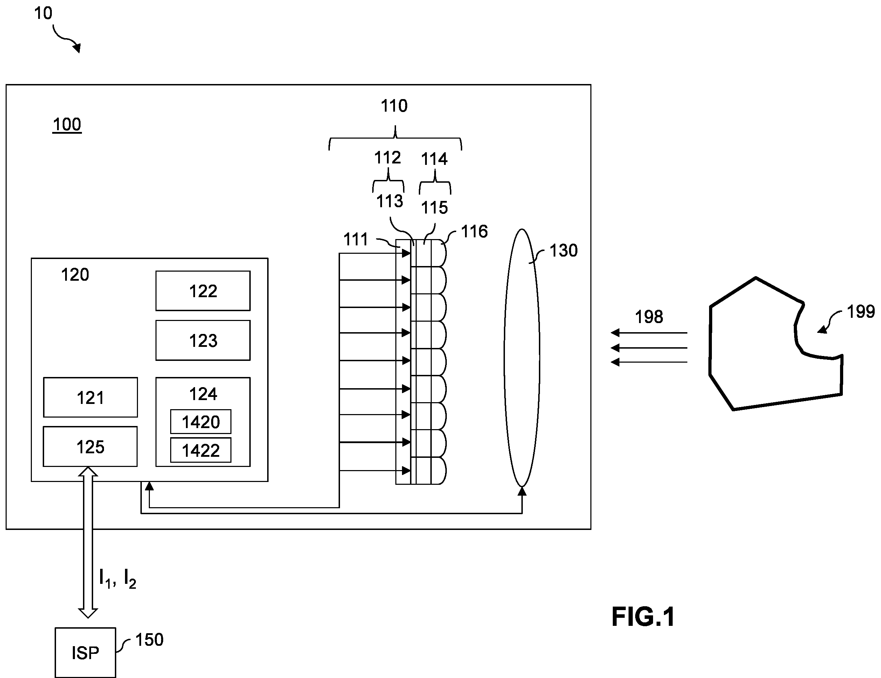

La Figure 1 illustre, à l'aide d'un diagramme fonctionnel, un système d'imagerie 10 composé d'un dispositif 100 d'imagerie à deux images natives de sortie et d'une unité de traitement externe 150, selon des modes de réalisation.

On entend par « image native » dans un dispositif d'imagerie, une image qui respecte les proportions du capteur de pixels utilisé et qui résulte d'un seul type spécifique de filtre utilisé au niveau du capteur de pixels (c'est-à-dire une image mono-composant).

Les deux images natives sont soit fournies simultanément en sortie à l'unité de traitement externe 150, soit l'une ou l'autre est fournie à l'unité 150 selon un mode actif sélectionné directement sur le dispositif ou par un équipement aval.

Le dispositif 100 est par exemple une caméra alors que l'unité de traitement externe 150 peut être un processeur de traitement d'image (ou « ISP ») ou tout autre processeur dans un ordinateur embarquant la caméra 100. En variante, l'unité de traitement externe 150 peut être un équipement autonome, distinct, auquel la caméra, externe, est connectée (de façon filaire ou non).

Le dispositif d'imagerie 100 comprend un capteur d'image 110 et un contrôleur 120 couplé au capteur 110 et opérant comme unité de traitement.

Le capteur d'image 110 acquiert des images d'un scène 199 en captant la lumière incidente 198 et génère des signaux électriques ou d'image correspondants, transmis au contrôleur 120 pour traitement.

Le capteur d'image 110 comprend typiquement un substrat semiconducteur 111 doté d'une pluralité 112 de photodiodes 113 formant des pixels, surmontées d'une pluralité 114 de filtres 115 et d'une pluralité de microlentilles 116. Le capteur d'image 110 peut être disposé derrière un jeu de lentilles 130 formant objectif du dispositif d'imagerie 100. Ces lentilles peuvent notamment être pilotées par le contrôleur 120 pour ajuster une puissance optique et effectuer une mise au point automatique.

Chaque microlentille 116 est couplée optiquement à un filtre 115, lui-même couplé optiquement à une photodiode 113. Le couplage optique peut simplement consister en un alignement géométrique. Chaque photodiode 113 constitue un capteur photosensible élémentaire, pour l'obtention d'un pixel dans une image acquise. Aussi, on assimile ci-après les photodiodes à des pixels.

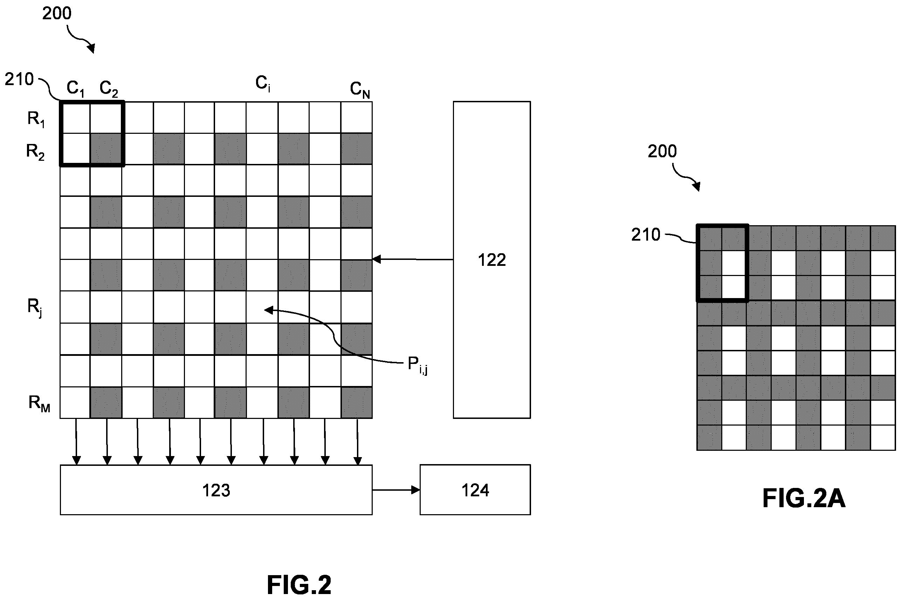

La Figure 2 représente une matrice 200 de pixels filtrés résultants de la superposition d'une matrice 112 de photodiodes / pixels 113 avec une matrice 114 de filtres 115, couplées optiquement.

La matrice de pixels filtrés (et donc chacune des matrices 112 et 114) est une matrice bidimensionnelle (2D) organisée en N colonnes C₁-C_{N} de pixels P et M lignes ou rangées R₁-R_{M} de pixels P avec N et M des entiers naturels. On note i,j les indices de colonne et ligne, de sorte que chaque pixel est noté P_{i,j}. Selon le format d'image, N et M peuvent être égaux ou différents. Une matrice de pixels est connue de la personne du métier ; aussi, une description plus détaillée n'est pas fournie.

Dans l'exemple de la Figure, la matrice 114 de filtres 115 permettant l'obtention de cette matrice de pixels filtrés 200 est formée par la répétition d'un motif 210 (en trait gras) de filtres 115. Le motif 210 est un filtre matriciel n*m, ici avec n=2 et m=2, de filtres individuels ou élémentaires 115. Bien entendu, d'autres tailles de motif 210 répété peuvent être utilisées.

Le motif 210 comprenant deux types de filtres, notés P1 (premier type) et P2 (deuxième type). Les filtres P1 du premier type sont en excès comparé au ou aux filtres P2 du deuxième type au sein du motif 210. On note 1/Q le ratio de filtres minoritaires P2 : 1/Q = #P2 / n*m, où #P2 est le nombre de filtres P2 dans le motif n*m.

Le motif 2*2 210 de la Figure est par exemple un motif « 3 pour 1 », à savoir trois filtres P1 pour un seul filtre P2 (1/Q=1/4). Il est noté :
(a) P1 P1
   P1 P2

Plus généralement, un motif n*m « X pour 1 » comprend n*m-1 filtres P1 pour un filtre P2 (1/Q=1/(n*m)). Par exemple pour n=m=3, le motif 210 est le suivant (1/Q=1/9) :
(b) P1 P1 P1
P1 P1 P1
P1 P1 P2

Pour n=3, m=2, le motif 210 est le suivant (1/Q=1/6) :
(c) P1 P1 P1
P1 P1 P2

Pour n=2, m=3, le motif 210 est le suivant (1/Q=1/6) :
(d) P1 P1
P1 P1
P1 P2.

La position du filtre P2 dans le motif a peu d'effet sur le résultat du traitement décrit par la suite, compte tenu de la répétition du motif dans la matrice 114.

Ces différents motifs 210, lorsqu'ils sont répétés pour former la matrice 114 de motifs, assurent que tout filtre P2 dans la matrice 114, , autre que les filtres à la périphérie de la matrice, est entouré par plus de filtres P1 que de filtres P2, mais également que tout filtre P1 non-périphérique dans la matrice 114 est entouré par autant ou plus de filtres P1 que de filtres P2. Tout motif 210 plus complexes que ceux explicités ci-dessus qui satisfont ces conditions est adapté pour une mise en œuvre des procédés décrits ci-après.

La Figure 2A illustre par exemple un motif alternatif 210' 2*3 comprenant deux filtres P2 voisins et quatre filtres P1 (1/Q=1/3). Chaque filtre P1 a au plus quatre filtres P2 voisins (et donc au pire quatre filtres P1 voisins) alors que chaque filtre P2 a au plus un filtre P2 voisin.

De retour à la Figure 1, le contrôleur 120 contrôle le fonctionnement du capteur d'image 110 et du jeu de lentilles 130. Il comprend un ou plusieurs processeurs 121, une unité de commande 122, une unité de lecture 123, une unité de traitement 124 et une interface 125.

Le processeur 121 est typiquement couplé à de la mémoire vive et/ou non volatile (non illustrée) pour exécuter des instructions commandant les autres unités 122-125 du contrôleur 120 pour la mise en œuvre des procédés décrits ci-après.

L'unité de commande 122 contrôle les caractéristiques opérationnelles du jeu de lentilles 130 et de la matrice de pixel 112, par exemple, la durée d'exposition des photodiodes, le moment où acquérir les valeurs des pixels des images.

L'unité de lecture 123 lit ou échantillonne le signal analogique provenant de chacune des photodiodes individuelles considérées simultanément ou selon une séquence prédéfinie, pour générer un signal de pixels, c'est-à-dire une image I aux dimensions N*M. Une telle unité de lecture 123 comprend notamment des convertisseurs analogique-numérique et des registres mémoire pour le stockage temporaire des valeurs de pixels acquises.

L'unité de traitement 124 est couplée à l'unité de lecture 123 pour recevoir le signal de pixels formant l'image I de dimensions N*M et traiter cette image I selon les procédés décrits ci-après. L'unité de traitement 124 peut mettre en œuvre un grand nombre de fonctionnalités de traitement. Pour la présente divulgation, l'unité de traitement 124 inclut une sous-unité 1240 de sous-échantillonnage et une sous-unité 1242 de correction de défaut de pixel.

Le sous-échantillonnage est une fonction généralement native dans les dispositifs / caméras de l'art antérieur. Les techniques de sous-échantillonnage sont bien connues de la personne du métier ; aussi, une description détaillée de ces techniques n'est pas fournie. Comme il ressort de la suite de la description, la sous-unité 1240 de sous-échantillonnage sous-échantillonne l'image I de dimensions N*M acquise de sorte à générer une première image I₁ de sortie formée des pixels correspondant aux filtres P2 minoritaires.

De même, la correction de défaut de pixel est une fonction généralement native dans les dispositifs / caméras de l'art antérieur. Les techniques de correction de défaut de pixel (ou « defect correction » en langue anglosaxonne) sont bien connues de la personne du métier et ne sont donc pas détaillées ici plus que de besoin. De façon générale, les algorithmes de correction de défaut sont mis en œuvre pour ne pas mettre systématiquement au rebut les capteurs présentant des pixels (photodiodes) défectueux, et ainsi permettre leur utilisation. Comme il ressort de la suite de la description, la sous-unité 1240 applique un mécanisme de correction de défaut de pixel à l'image I de dimensions N*M acquise de sorte à générer une deuxième image I₂ de sortie. Cette image de sortie conserver avantageusement la résolution maximale d'acquisition N*M.

L'interface 125 gère l'échange d'informations d'entrée/sortie (I/O) avec l'unité de traitement externe 150.

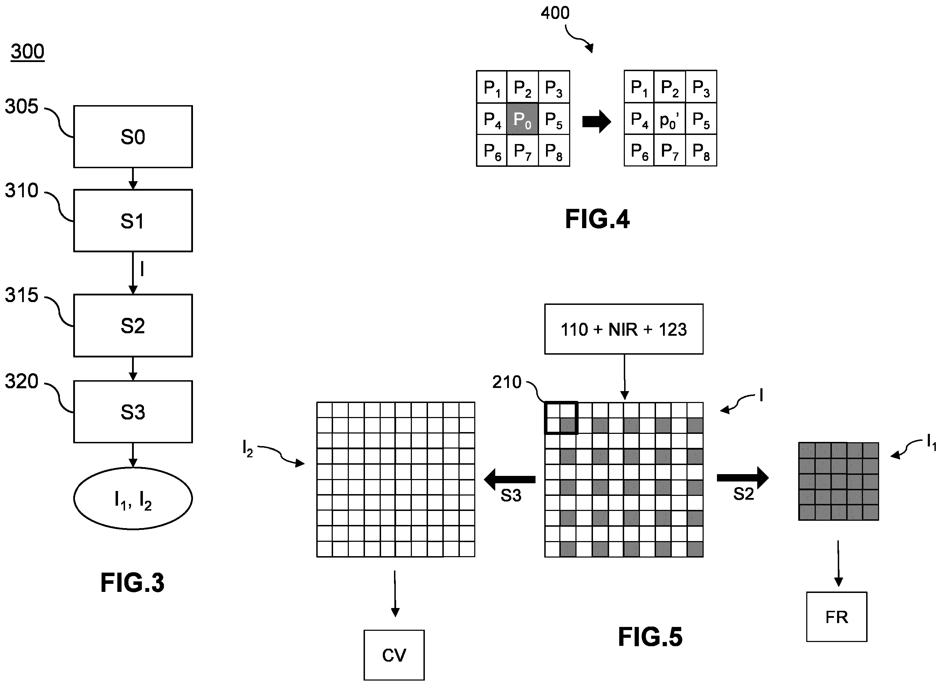

La Figure 3, illustre à l'aide d'un ordinogramme, des étapes d'un procédé 300 d'acquisition d'images. Ce procédé est notamment réalisé par le dispositif 100 de la Figure 1, et plus précisément par le contrôleur 120 à l'aide du capteur 110.

A l'étape optionnelle 305 notée S0, un motif 210 de filtres est choisi parmi une bibliothèque de motifs, par exemple ceux présentés ci-dessus.

Le choix du motif influe sur les qualité et rapidité de génération de l'image de sortie présentant la résolution N*M, ainsi que sur la résolution de l'autre image générée.

Le choix du motif 210 peut être réalisé par un opérateur directement sur le dispositif / caméra 100 (via par exemple un menu de sélection en utilisant l'interface I/O 125) ou par l'équipement (ordinateur) auquel est connecté le dispositif / caméra 100, par exemple par l'application exécutée sur cet équipement et qui utilise les images.

L'étape S0 permet ainsi de configurer, si nécessaire, la matrice 114 de filtres 115, et notamment le motif répété 210. A titre d'exemple, tous ou partie des paramètres suivants peuvent être configurés lors de cette étape : les dimensions n*m du motif, le ratio 1/Q, la répartition des filtres P1 et P2 dans le motif, la nature des filtres P1 et P2.

A l'étape 310 notée S1, une image I de dimensions N*M est acquise à l'aide du capteur 110. Le contrôleur 120 reçoit un signal de chaque pixel de la matrice 112 de pixels 113 couplée optiquement à la matrice 114 de filtres 115. Comme illustré par la Figure 2 par exemple, cette image I comprend des pixels issus d'un filtrage P1 et d'autres pixels issus d'un filtrage P2. Cette image n'est donc pas homogène à ce stade, puisqu'elle combine des pixels de natures différentes.

Typiquement, l'unité de traitement 124 reçoit l'image I.

A l'étape 315 notée S2, l'image I est traitée pour la sous-unité 1240 de sous-échantillonnage. Cette sous-unité sous-échantillonne le signal de pixels I pour générer une première image I₂ de sortie formée des pixels correspondant aux filtres P2. En pratique, le sous-échantillonnage conserve simplement les pixels colocalisés avec les filtres P2. La taille de l'image I₂ est alors réduite de Q par rapport à la résolution maximale N*M : dimension(I₂) = N*M/Q.

Avantageusement, cette opération S2 utilise une fonction de sous-échantillonnage déjà présente dans les dispositifs / caméras 100 de l'état de l'art.

A l'étape 320 notée S3, l'image I est traitée pour la sous-unité 1242 de correction de défaut de pixel.

Avantageusement, l'algorithme de correction de défaut de pixel appliqué à l'image I effectue, de façon automatique, une détection des éventuels pixels défectueux dans l'image et une correction de ceux-ci pour générer une deuxième image I₂ de sortie de mêmes dimensions que l'image I.

La détection des pixels défectueux s'opère par exemple par la détermination des pixels dont la valeur est en dehors d'une plage de valeurs fonction des valeurs prises par des pixels voisins. La plage de valeurs peut être définie simplement par les valeurs minimale et maximale des pixels voisins. En variante, cet intervalle peut être augmenter (en proportion de son étendue) pour éviter la correction de pixels dont la valeur demeure proche des pixels voisins.

La Figure 4 illustre un pixel P₀ analysé entouré de huit pixels voisins P₁ à P₈, qui lui sont immédiatement adjacents. Les valeurs minimale et maximale prises par les pixels P₁ à P₈ sont utilisées pour définir une plage de valeurs W, à partir de laquelle le pixel P₀ est déterminé comme défectueux ou non. En notant p₀ la valeur de P₀, si p₀ n'appartient pas à W, alors P₀ est considéré comme défectueux ; si p₀ appartient à W, alors P₀ est considéré comme non défectueux.

En raison de l'inhomogénéité de l'image I (découlant des deux types de filtres), cet algorithme permet avantageusement d'identifier les pixels de type minoritaire (ici le type P2) afin de les corriger en fonction des pixels voisins, donc de pixels majoritairement de type P1. Il en résulte une correction homogénéisant l'image dans la seule composante de type P1.

En utilisant le motif 210 de la Figure 2, les pixels de type P2 (colocalisés à un filtre P2) sont entourés de pixels de type P1 uniquement, amenant à considérer préférentiellement les pixels de type P2 comme étant défectueux. D'une façon générale, lorsque les filtres P1 sont majoritaires, ce sont les pixels de type P2 qui sont les plus susceptibles d'être détectés comme étant défectueux. Les conditions évoquées plus haut sur le ratio entre les pixels voisins de type P1 et ceux de type P2, conduisent à favoriser la situation où les pixels de type P2 sont les plus susceptibles d'être détectés comme étant défectueux
Bien entendu, d'autres mécanismes de détection de pixels défectueux peuvent être mis en œuvre. Par exemple, la distance (différence) entre p₀ et la moyenne des valeurs des pixels voisins peut être comparée à une valeur seuil.

Certains pixels de type P1 ont un pixel de type P2 comme voisin immédiat. De même, avec certains motifs 210, un pixel de type P2 peut également avoir un autre pixel de type P2 comme voisin immédiat. Dans un mode de réalisation, il peut être prévu de ne considérer comme pixels voisins pour la détection des pixels défectueux que les pixels voisins de type P1, c'est-à-dire colocalisés à des filtres P1. Cette configuration favorise bien entendu la détection des seuls pixels de type P2 comme étant défectueux, aux fins de les corriger.

Si dans l'exemple qui précède, la notion de voisinage ne retient que les pixels P₁-P₈ immédiatement adjacents au pixel P₀, des variantes peuvent être amenés à considérer les pixels voisins de rang 2 (voire plus), c'est-à-dire les pixels voisins aux pixels immédiatement adjacents.

Chaque pixel détecté comme étant défectueux est alors corrigé par l'algorithme de correction de défaut de la sous-unité 1422. Cela permet de convertir les pixels issus des filtres P2 en des valeurs de pixels corrélées à celles des pixels de type P1. L'objectif de cette opération est d'obtenir une image de pleine résolution N*M mono-composante, correspondant à la composante filtrée par les filtres de type P1.

Dans un mode de réalisation, le mécanisme de correction de défaut applique un filtre médian bi-dimensionnel à tout pixel déterminé comme défectueux dans l'image I.

La Figure 4 illustre le cas d'un filtre médian 3*3 400. Celui-ci modifie la valeur p₀ en la valeur médiane p₀' des pixels P₁-P₈. De la sorte, la nouvelle valeur p₀' est homogène aux pixels obtenus à l'aide des filtres de type P1. Une image pleine résolution, filtrée P1 en tout pixel est ainsi obtenue alors que la matrice 114 de filtres 115 n'est pas entièrement composée de filtres P1.

Dans certains modes de réalisation, le filtre 400 appliqué peut exclure du calcul correctif les pixels voisins défectueux non encore corrigés. Cette disposition augmente la qualité de l'image I₂.

Dans certains modes de réalisation, le filtre 400 est appliqué en parcourant l'image selon un motif de balayage et corrigeant donc les pixels progressivement pendant le parcours de l'image. Cela permet de réduire le nombre de pixels de type P2 pris en compte dans la détection et l'éventuelle correction de pixels ultérieurs. Le motif de balayage est avantageusement choisi parmi :
un balayage progressif ligne par ligne (ou colonne par colonne),
un balayage progressif continu ligne par ligne (ou colonne par colonne), c'est-à-dire sans retour à la ligne,
un balayage en zigzag en diagonale.

Bien entendu, d'autres techniques de correction de défaut que le filtre médian peuvent être utilisées. La littérature en la matière en propose un grand nombre. A titre illustratif, un filtre moyenneur par exemple 3*3 (typiquement convolutif) peut être utilisé. La dimension de filtre 3*3 (média, moyenneur ou autre) n'est donnée ici qu'à titre illustratif ; toute autre dimension peut être envisagée, par exemple 5*5. Par ailleurs, des poids différents peuvent être appliqués aux valeurs des pixels voisins.

Avantageusement, l'opération S3 utilise une fonction de correction de défaut déjà présente dans les dispositifs / caméras 100 de l'état de l'art.

Bien que représentées successives, les opérations S2 et S3 peuvent être réalisées simultanément, ou dans l'ordre inverse de celui décrit.

Les étapes S1 à S3 peuvent être répétées pour plusieurs images successives, notamment dans le cadre de l'acquisition d'une séquence vidéo.

La Figure 5 illustre une application des procédés telle que définie par les revendications indépendantes 1 et 11. Dans cette application, le dispositif / caméra 100 génère une image de la scène externe 199 dans le spectre infrarouge pour une utilisation lors de l'identification d'un individu par reconnaissance faciale, et génère une autre image de la scène externe 199 dans le spectre visible pour une utilisation de vision par ordinateur.

Pour ce faire, les filtres P1 (ou P2) sont des filtres clairs (c'est-à-dire soit sans filtre optique, soit avec filtre optique sans couleur) et les autres filtres sont des filtres infrarouge.

Le capteur 110 permet en collaboration avec une illumination NIR et l'unité de lecture 123 d'obtenir l'image I formée d'une matrice de pixels filtrés selon le motif 210 répété, c'est-à-dire une image inhomogène avec des pixels filtrés P1 et des pixels filtrés P2.

Dans l'exemple de la Figure, les pixels clairs correspondent aux pixels obtenus au travers d'un filtre clair, alors que les pixels foncés correspondent aux pixels obtenus au travers d'un filtre IR. L'inverse est possible.

Le sous-échantillonnage 1240 des pixels de type minoritaire (P2, infrarouge dans l'exemple) lors l'étape S2 permet l'obtention de l'image I₁ formée des seuls pixels IR foncés. Cette image peut alors être fournie en entrée d'un module de reconnaissance faciale FR.

La correction de défaut 1242 permet, lors de l'étape S3, de substituer les pixels IR foncés par des valeurs homogènes aux pixels clairs et ainsi obtenir une image I₂ pleine résolution dans le spectre visible. Cette image peut alors être fournie en entrée d'un moteur de vision par ordinateur CV.

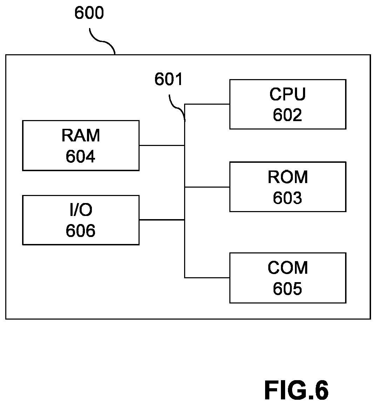

La Figure 6 illustre une architecture matérielle pour le dispositif 100 de la Figure 1. Il comprend un bus de communication 601 auquel sont préférablement connectés :
- une ou plusieurs unités centrales de traitement 602, telles qu'un ou des processeurs CPU et/ou un ou des microprocesseurs ;
- une mémoire de stockage 603, de type ROM et/ou mémoire flash, pour le stockage de programmes informatiques destinés à mettre en œuvre tout ou partie des opérations décrites ci-dessus ;
- une mémoire vive 604, de type RAM voire vidéo RAM (VRAM), pour le stockage du code exécutable des programmes informatiques ainsi que les registres adaptés pour enregistrer des variables et des paramètres nécessaires à leur exécution ;
- une interface de communication 605 connectée à un réseau (non représenté), un câble, un bus ou tout autre moyen pour échanger des informations avec des composants ou équipements externes (par exemple un processeur ISP) ; et
- une ou plusieurs entrées/sorties I/O 606 permettant à un opérateur d'interagir avec les programmes informatiques, tant en configuration qu'en exploitation. Typiquement, les entrées/sorties peuvent inclure un écran servant d'interface graphique avec l'opérateur, pouvant être tactile ou être combiné avec un clavier ou tout autre moyen de pointage pour permettre à l'opérateur d'interagir avec les programmes.

Le bus de communication 601 assure la communication et l'interopérabilité entre les différents éléments inclus dans le dispositif informatique 100 ou connectés à celui-ci.

L'unité centrale 602 est de préférence adaptée pour contrôler et diriger l'exécution des instructions ou des parties de code logiciel du ou des programmes informatiques. À la mise sous tension, le ou les programmes qui sont stockés en mémoire non volatile 603 sont transférés/chargés dans la mémoire vive 604, qui contient alors le code exécutable du ou des programmes, ainsi que des registres pour le stockage des variables et des paramètres nécessaires à la mise en œuvre des procédés décrits.

Bien entendu, la présente divulgation ne se limite pas aux formes de réalisation décrites ci-avant à titre d'exemples ; elle s'étend à d'autres variantes. D'autres réalisations sont possibles.

Par exemple, si les fonctions de sous-échantillonnage 1420 et de correction de défaut 1422 sont illustrées à l'intérieur de contrôleur 120 et du dispositif 100, elles peuvent être réalisées par un composant externe, placé avant le module de reconnaissance faciale FR et le moteur de vision par ordinateur CV dans l'exemple ci-dessus.

## Revendications

1. Dispositif (100) d'image comprenant :
une matrice (112) de pixels (113) pour acquérir des images (I),
une matrice (114) de filtres de pixel (115) couplée optiquement à la matrice de pixels et formée par la répétition d'un motif de filtres (210), le motif de filtres comprenant des filtres de pixel d'un premier type, dits filtres P1, en excès comparé à un ou des filtres de pixel d'un deuxième type, dits filtres P2, du motif de filtres,
une unité de traitement (120, 124) couplée à la matrice de pixels pour (i) sous-échantillonner une image acquise par la matrice de pixels de sorte à générer une première image (I₁) de sortie formée des pixels correspondant aux filtres P2, et pour (ii) appliquer un mécanisme de correction de défaut de pixel à l'image acquise de sorte à générer une deuxième image (I₂) de sortie de mêmes dimensions que l'image acquise,
le dispositif étant **caractérisé en ce que** les filtres P1 sont des filtres clairs et les filtres P2 sont des filtres infrarouge, ou **en ce que** les filtres P1 sont des filtres infrarouge et les filtres P2 sont des filtres clairs.

2. Dispositif selon la revendication 1, dans lequel le motif de filtres (210) est un filtre matriciel n*m comprenant n*m-1 filtres P1 et un filtre P2.

3. Dispositif selon la revendication 1 ou 2, dans lequel le motif de filtres (210) est l'un parmi :
(a) P1 P1
P1 P2
(b) P1 P1 P1
P1 P1 P1
P1 P1 P2
(c) P1 P1 P1
P1 P1 P2
(d) P1 P1
P1 P1
P1 P2.

4. Dispositif selon l'une des revendications précédentes, dans lequel tout filtre P2 non-périphérique dans la matrice (114) de filtres est entouré par plus de filtres P1 que de filtres P2.

5. Dispositif selon l'une des revendications précédentes, dans lequel tout filtre P1 non-périphérique dans la matrice (114) de filtres est entouré par autant ou plus de filtres P1 que de filtres P2.

6. Dispositif selon l'une des revendications précédentes, dans lequel le mécanisme de correction de défaut est configuré pour appliquer un filtre médian bi-dimensionnel (400) à tout pixel (P_{i,j}) déterminé comme défectueux dans l'image acquise (I).

7. Dispositif selon la revendication 6, dans lequel un pixel est déterminé comme défectueux dans l'image acquise lorsque sa valeur (p₀) est en dehors d'une plage de valeurs (W) fonction des valeurs prises par des pixels voisins.

8. Dispositif selon la revendication 7, dans lequel les pixels voisins sont des pixels voisins correspondant à des filtres P1.

9. Système d'imagerie (10) comprenant une unité de traitement (150, CV, FR) et un dispositif d'image (100) selon l'une des revendications précédentes, fournissant l'une des première et deuxième images (I₁, I₂) à l'unité de traitement lorsque celle-ci opère dans un mode d'identification par reconnaissance faciale et fournit l'autre image à l'unité de traitement lorsque celle-ci opère dans un mode de vision par ordinateur.

10. Système selon la revendication 9, dans lequel l'image fournie (I₁) à l'unité de traitement (150, FR) dans un mode d'identification par reconnaissance faciale est une image infrarouge, alors que l'image (I₂) fournie à l'unité de traitement (150, CV) dans un mode de vision par ordinateur est une image dans le spectre visible.

11. Procédé (300) d'acquisition d'images comprenant :
recevoir (310) un signal de chaque pixel formant image (I), d'une matrice (112) de pixels (113) couplée optiquement à une matrice (114) de filtres de pixel (115), la matrice de filtres de pixel étant formée par la répétition d'un motif de filtres (210), le motif de filtres comprenant des filtres de pixel d'un premier type, dits filtres P1, en excès comparé à un ou des filtres de pixel d'un deuxième type, dits filtres P2, du motif de filtres,
sous-échantillonner (315) le signal de pixels formant image pour générer une première image (I₁) de sortie formée des pixels correspondant aux filtres P2, et
appliquer (320) un mécanisme de correction de défaut de pixel au signal de pixels formant image pour générer une deuxième image (I₂) de sortie de mêmes dimensions que ladite image,
le procédé étant **caractérisé en ce que** les filtres P1 sont des filtres clairs et les filtres P2 sont des filtres infrarouge, ou **en ce que** les filtres P1 sont des filtres infrarouge et les filtres P2 sont des filtres clairs.

12. Procédé selon la revendication précédente, dans lequel le mécanisme de correction de défaut applique un filtre médian bi-dimensionnel (400) à tout pixel (P_{i,j}) déterminé comme défectueux dans l'image acquise (I).

13. Procédé selon la revendication précédente, dans lequel un pixel est déterminé comme défectueux dans l'image acquise lorsque sa valeur (p₀) est en dehors d'une plage de valeurs (W) fonction des valeurs prises par des pixels voisins.

14. Procédé selon la revendication précédente, dans lequel les pixels voisins sont des pixels voisins correspondant à des filtres P1.

## Patentansprüche

1. Bildgebungsvorrichtung (100), umfassend:
eine Matrix (112) aus Pixeln (113), um Bilder (I) zu erfassen,
eine Matrix (114) aus Pixelfiltern (115), die optisch mit der Pixelmatrix gekoppelt ist und durch die Wiederholung eines Filtermusters (210) gebildet wird, wobei das Filtermuster Pixelfilter eines ersten Typs, sogenannte Filter P1, im Vergleich zu einem oder mehreren Pixelfiltern eines zweiten Typs, sogenannte Filter P2, des Filtermusters im Übermaß umfasst,
eine mit der Pixelmatrix gekoppelte Verarbeitungseinheit (120, 124), um (i) eine Unterabtastung an einem von der Pixelmatrix erfassten Bild durchzuführen, um ein erstes Ausgangsbild (I₁) zu erzeugen, das aus den Pixeln gebildet wird, die den Filtern P2 entsprechen, und um (ii) einen Mechanismus zur Korrektur von Pixelfehlern auf das erfasste Bild anzuwenden, um ein zweites Ausgabebild (I₂) mit denselben Abmessungen wie das erfasste Bild zu erzeugen, wobei die Vorrichtung **dadurch gekennzeichnet ist, dass** die Filter P1 Klarfilter sind und die Filter P2 Infrarotfilter sind, oder dass die Filter P1 Infrarotfilter sind und die Filter P2 Klarfilter sind.

2. Vorrichtung nach Anspruch 1, wobei das Filtermuster (210) ein n*m-Matrixfilter ist, der n*m-1 Filter P1 und einen Filter P2 umfasst.

3. Vorrichtung nach Anspruch 1 oder 2, wobei das Filtermuster (210) eines von Folgendem ist:
(a) P1 P1
P1 P2
(b) P1 P1 P1
P1 P1 P1
P1 P1 P2
(c) P1 P1 P1
P1 P1 P2
(d) P1 P1
P1 P1
P1 P2.

4. Vorrichtung nach einem der vorhergehenden Ansprüche, wobei jeder nicht periphere Filter P2 in der Filtermatrix (114) von mehr Filtern P1 als von Filtern P2 umgeben ist.

5. Vorrichtung nach einem der vorhergehenden Ansprüche, wobei jeder nicht periphere Filter P1 in der Filtermatrix (114) von ebenso vielen oder mehr Filtern P1 umgeben ist als von Filtern P2.

6. Vorrichtung nach einem der vorhergehenden Ansprüche, wobei der Fehlerkorrekturmechanismus so konfiguriert ist, dass er einen zweidimensionalen Mittelfilter (400) auf jedes Pixel (Pᵢ,ⱼ) anwendet, das in dem erfassten Bild (I) als fehlerhaft bestimmt wird.

7. Vorrichtung nach Anspruch 6, wobei ein Pixel im erfassten Bild als fehlerhaft bestimmt wird, wenn sein Wert (p₀) außerhalb eines Wertebereichs (W) liegt, der von den Werten von benachbarten Pixeln abhängt.

8. Vorrichtung nach Anspruch 7, wobei die benachbarten Pixel benachbarte Pixel sind, die den Filtern P1 entsprechen.

9. Bildgebungssystem (10), umfassend eine Verarbeitungseinheit (150, CV, FR) und eine Bildgebungsvorrichtung (100) nach einem der vorhergehenden Ansprüche, die der Verarbeitungseinheit eines des ersten und des zweiten Bilds (I₁, I₂) bereitstellt, wenn diese in einem Identifizierungsmodus mittels Gesichtserkennung arbeitet, und der Verarbeitungseinheit das andere Bild bereitstellt, wenn diese in einem Computersichtmodus arbeitet.

10. System nach Anspruch 9, wobei das der Verarbeitungseinheit (150, FR) in einem Identifizierungsmodus mittels Gesichtserkennung bereitgestellte Bild (I₁) ein Infrarotbild ist, während das der Verarbeitungseinheit (150, CV) in einem Computersichtmodus bereitgestellte Bild (I₂) ein Bild im sichtbaren Spektrum ist.

11. Verfahren (300) zur Bilderfassung, umfassend:
Empfangen (310) eines Signals von jedem bildgebenden Pixel (I) einer Matrix (112) aus Pixeln (113), die optisch mit einer Matrix (114) aus Pixelfiltern (115) gekoppelt ist, wobei die Matrix aus Pixelfiltern durch die Wiederholung eines Filtermusters (210) gebildet wird, wobei das Filtermuster Pixelfilter eines ersten Typs, sogenannte P1-Filter, im Vergleich zu einem oder mehreren Pixelfiltern eines zweiten Typs, sogenannten P2-Filtern, des Filtermusters im Übermaß umfasst,
Unterabtasten (315) des bildgebenden Pixelsignals, um ein erstes Ausgangsbild (I₁) zu erzeugen, das aus den Pixeln gebildet wird, die den Filtern P2 entsprechen, und
Anwenden (320) eines Pixelfehlerkorrekturmechanismus auf das bildgebende Pixelsignal, um ein zweites Ausgangsbild (I₂) mit denselben Abmessungen wie das Bild zu erzeugen,
wobei das Verfahren **dadurch gekennzeichnet ist, dass** die Filter P1 Klarfilter sind und die Filter P2 Infrarotfilter sind, oder dass die Filter P1 Infrarotfilter sind und die Filter P2 Klarfilter sind.

12. Verfahren nach dem vorhergehenden Anspruch, wobei der Fehlerkorrekturmechanismus einen zweidimensionalen Mittelfilter (400) auf jedes Pixel (P_{i,j}) anwendet, das im erfassten Bild (I) als fehlerhaft bestimmt wird.

13. Verfahren nach dem vorhergehenden Anspruch, wobei ein Pixel im erfassten Bild als fehlerhaft bestimmt wird, wenn sein Wert (p₀) außerhalb eines Wertebereichs (W) liegt, der von den Werten von benachbarten Pixeln abhängt.

14. Verfahren nach dem vorhergehenden Anspruch, wobei die benachbarten Pixel benachbarte Pixel sind, die den Filtern P1 entsprechen.

## Claims

1. Image device (100) comprising:
an array (112) of pixels (113) for acquiring images (I),
an array (114) of pixel filters (115) optically coupled to the pixel array and formed by the repetition of a pattern of filters (210), the pattern of filters comprising an excess of pixel filters of a first type, referred to as P1 filters, compared to one or more pixel filters of a second type, referred to as P2 filters, of the pattern of filters, a processing unit (120, 124) coupled to the pixel array for (i) undersampling an image acquired by the pixel array so as to generate a first output image (I₁) formed of the pixels corresponding to the P2 filters, and for (ii) applying a pixel defect correction mechanism to the acquired image so as to generate a second output image (I₂) with the same dimensions as the acquired image,
the device being **characterised in that** the P1 filters are clear filters and the P2 filters are infrared filters, or **in that** the P1 filters are infrared filters and the P2 filters are clear filters.

2. Device according to claim 1, wherein the pattern of filters (210) is an n*m array filter comprising n*m-1 P1 filters and one P2 filter.

3. Device according to claim 1 or 2, wherein the pattern of filters (210) is one of:
(a) P1 P1
P1 P2
(b) P1 P1 P1
P1 P1 P1
P1 P1 P2
(c) P1 P1 P1
P1 P1 P2
(d) P1 P1
P1 P1
P1 P2.

4. Device according to one of the preceding claims, wherein any nonperipheral P2 filter in the filter array (114) is surrounded by more P1 filters than P2 filters.

5. Device according to one of the preceding claims, wherein any nonperipheral P1 filter in the filter array (114) is surrounded by as many or more P1 filters than P2 filters.

6. Device according to one of the preceding claims, wherein the defect correction mechanism is configured to apply a two-dimensional median filter (400) to any pixel (P_{i,j}) determined to be defective in the acquired image (I).

7. Device according to claim 6, wherein a pixel is determined to be defective in the acquired image when its value (p₀) is outside a range of values (W) which is a function of the values taken by neighbouring pixels.

8. Device according to claim 7, wherein the neighbouring pixels are neighbouring pixels corresponding to P1 filters.

9. Imaging system (10) comprising a processing unit (150, CV, FR) and an image device (100) according to one of the preceding claims, supplying one of the first and second images (I₁, I₂) to the processing unit when this operates in an identification mode by face recognition, and supplying the other image to the processing unit when this operates in a computer vision mode.

10. System according to claim 9, wherein the image (I₁) supplied to the processing unit (150, FR) in an identification mode by face recognition is an infrared image, whereas the image (I₂) supplied to the processing unit (150, CV) in a computer vision mode is an image in the visible spectrum.

11. Method (300) for acquiring images, comprising:
receiving (310) a signal of each pixel forming image (I), from an array (112) of pixels (113) optically coupled to an array (114) of pixel filters (115), the array of pixel filters being formed by the repetition of a pattern of filters (210), the pattern of filters comprising an excess of pixel filters of a first type, referred to as P1 filters, compared to one or more pixel filters of a second type, referred to as P2 filters, of the pattern of filters,
undersampling (315) the signal of pixels forming image in order to generate a first output image (I₁) formed of the pixels corresponding to the P2 filters, and
applying (320) a pixel defect correction mechanism to the signal of pixels forming image in order to generate a second output image (I₂) of the same dimensions as said image,
the method being **characterised in that** the P1 filters are clear filters and the P2 filters are infrared filters, or **in that** the filters P1 are infrared filters and the P2 filters are clear filters.

12. Method according to one of the preceding claims, wherein the defect correction mechanism is configured to apply a two-dimensional median filter (400) to any pixel (P_{i,j}) determined to be defective in the acquired image (I).

13. Method according to the preceding claim, wherein a pixel is determined to be defective in the acquired image when its value (p₀) is outside a range of values (W) which is a function of the values taken by neighbouring pixels.

14. Method according to the preceding claim, wherein the neighbouring pixels are neighbouring pixels corresponding to P1 filters.
